# EUROPEAN PATENT SPECIFICATION

(11) **EP 4 036 487 B1**
(45) Date of publication and mention of the grant of the patent: **21.05.2025**
(21) Application number: 22150661.1
(22) Date of filing: 10.01.2022
(51) Int. Cl.: F24F 3/14

(54) **ELECTROCHEMICAL DEHUMIDIFIER WITH MULTIPLE AIR CONTACTORS**
ELEKTROCHEMISCHER ENTFEUCHTER MIT MEHREREN LUFTSCHÜTZEN
DÉSHUMIDIFICATEUR ÉLECTROCHIMIQUE À PLUSIEURS CONTACTEURS D'AIR

(30) Priority: 29.01.2021 US 202117161904
(43) Date of publication of application: 03.08.2022
(73) Proprietor: Palo Alto Research Center Incorporated, Webster, NY 14580 (US)
(72) Inventor: BENEDICT, Michael, Palo Alto, 94304 (US); TORRES, Franciso E, Palo Alto, 94304 (US); BEH, Eugene S, Palo Alto, 94304 (US); MELES, Aaron, Palo Alto, 94304 (US)
(74) Representative: Cooley (UK) LLP

(56) References cited:
- WO-A1-2018/191806
- WO-A2-2015/143332
- US-A1- 2018 187 906
- US-A1- 2020 164 302
- US-B2- 10 821 395

## Description

### TECHNICAL FIELD

This disclosure relates generally to air dehumidifying systems that utilize electrochemical regeneration of a liquid desiccant and a plurality of air contactors. The present invention in particular relates to air dehumidification systems and a dehumidifying method as defined in the claims.

### BACKGROUND

While necessary for comfort, and in parts of the world survival, air conditioning has a significant negative impact on the environment. Currently, air conditioning systems produce heat that measurably increases urban temperatures, and they have the potential to discharge unsafe chemicals, such as greenhouse gases, to the atmosphere. To do this, they also consume vast amounts of energy, primarily electricity. With the climate's ever- increasing temperatures, the demand for air conditioning systems will continue to increase such that energy demand from air conditioning systems is expected to triple in the next thirty years.

Using liquid desiccant regenerators in an air conditioning system can reduce energy consumption as compared with vapor compression-based air conditioning systems. Some types of air conditioning systems utilize at least two air contactors (e.g., air-liquid contactors); however, these systems do not electrochemically regenerate the liquid desiccant. Instead they utilize one of the air contactors to regenerate the liquid desiccant by rejecting moisture to a second air stream. These types of systems necessarily perform all of their liquid desiccant regeneration via the second air contactor. The first air contactor is then dedicated to dehumidifying a first air stream. Described herein are air conditioning systems and processes that reduce both energy consumption and overall system costs while increasing system operating ranges by electrochemically regenerating a liquid desiccant in combination with two or more air contactors.

US2020164302A1 concerns air flows across an air-liquid interface such that liquid desiccant flowing through the interface absorbs water from the air and is thereby diluted to form an output stream. The output stream is circulated through an electrodialytic stack having a central ionic exchange membrane and first and second outer ionic exchange membranes. A redox shuttle loop circulates around the first and second outer ionic exchange membranes. A voltage is applied across the electrodialytic stack, which regenerates the liquid desiccant.

### SUMMARY

The present invention is directed to a system according to claim 1.

In another embodiment, a system is provided according to claim 11.

A further embodiment is directed to a method according to claim 15.

The above summary is not intended to describe each disclosed embodiment or every implementation of the present disclosure. The figures and the detailed description below more particularly exemplify illustrative embodiments.

### BRIEF DESCRIPTION OF THE DRAWINGS

The discussion below refers to the following figures, wherein the same reference number may be used to identify the similar/same component in multiple figures. However, the use of a number to refer to a component in a given figure is not intended to limit the component in another figure labeled with the same number. The figures are not necessarily to scale.
FIG. 1 is a block diagram of an electrochemically regenerated dehumidification system utilizing one air contactor;
FIG. 2 is a diagram of an electrochemically regenerated dehumidification system according to an example embodiment;
FIG. 2A is a diagram of an electrochemical liquid desiccant regeneration system according to an example embodiment;
FIG. 3 is a block diagram of an electrochemically regenerated dehumidification system including two air contactors according to an example embodiment;
FIG. 4 is a block diagram of an electrochemically regenerated dehumidification system including two air contactors coupled with a heat exchange module according to an example embodiment;
FIG. 5 is a block diagram of an electrochemically regenerated dehumidification system including two air contactors coupled with a heat exchange module including evaporative cooling according to an example embodiment;
FIG. 6 is a block diagram of an electrochemically regenerated dehumidification system including two air contactors and incorporating exhaust air according to an example embodiment;
FIG. 7 is a block diagram of an electrochemically regenerated dehumidification system including two air contactors coupled with a heat exchange module including evaporative cooling and incorporating exhaust air according to an example embodiment;
FIG. 8 is a block diagram of an electrochemically regenerated dehumidification system including two air contactors one of which is configured to over dehumidify an input air stream according to an example embodiment;
FIG. 9 is a block diagram of an electrochemically regenerated dehumidification system including three air contactors according to an example embodiment; and
FIGS. 10-11 are flow charts of methods according to example embodiments.

### DETAILED DESCRIPTION

The present invention relates to electrochemically regenerated liquid desiccant dehumidification systems. A liquid desiccant system may be used in, among other things, heating, ventilation, and air-conditioning (HVAC). As set forth above, air conditioning is an energy intensive process and is responsible for nearly 10% of U.S. electricity consumption, with dehumidification accounting for more than half of the energy load in humid regions. The systems described herein provide an efficient, thermodynamic approach to dehumidification for air conditioning including a redox-assisted electrodialysis liquid desiccant regenerator in combination with two or more air contactors.

The systems each utilize two, or more air contactors in conjunction with an electrochemical regenerator in order to perform dehumidification and/or cooling using liquid desiccants. This combination leverages an electrochemical system which does not require contact with air, or heat input, to regenerate liquid desiccants. The electrochemical regeneration system feeds a first air contactor that dehumidifies a first air stream and at least partially feeds at least a second air contactor that also regenerates liquid desiccants. This allows for control over the amount of regeneration taking place in the second air contactor in a range from fully regenerating liquid desiccants to performing no regeneration in the second air contactor, which means that the size and/or cost of the second air contactor can be reduced. The dual modes of regeneration (i.e., electrochemical regenerator and at least one air contactor) make the systems more robust to a variety of operating conditions (e.g., ranges of environmental humidity and temperatures).

Each of the disclosed systems include an electrochemical regeneration system that utilizes a redox-assisted electrodialysis process that enables a membrane-based liquid desiccant air conditioning system. In this redox-assisted electrodialysis (ED) process, an aqueous solution of a redox-active species is circulated between the anode and cathode of an electrochemical stack to concentrate ionic solutions, eliminating thermodynamic phase changes driven by the heat or pressure necessary for vapor compression (VC) or desiccant based air conditioning. Liquid desiccants (e.g., aqueous solutions of salts such as lithium chloride) will absorb moisture from air across a membrane interface. Diluted liquid desiccants will be efficiently re-concentrated, avoiding the latent heat input required to evaporate water. It is estimated that the enhanced efficiency of this cycle leads to 1.5 quads of energy savings yearly by 2030.

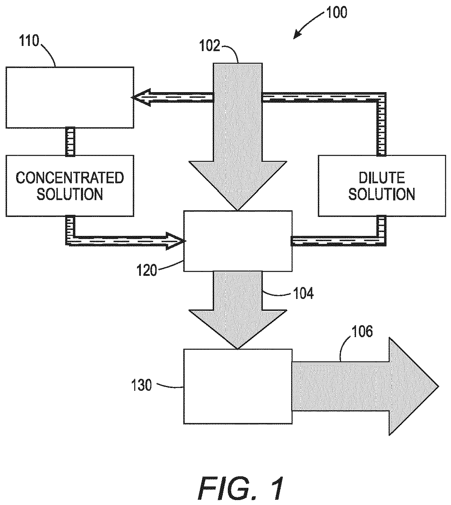

In FIG. 1, a diagram illustrates a dehumidification system 100 utilizing an electrochemical regeneration system 110 in conjunction with a single air contactor 120. The regeneration system outputs a concentrated solution of liquid desiccant (e.g., an aqueous salt solution) to an air contactor 120 (e.g., a liquid to air mass and energy exchanger, which may, or may not, include a membrane). Air is flowed over the concentrated solution of liquid desiccant either directly or via a membrane where water from the air stream is absorbed by the liquid desiccant stream. The air stream may be outside air, return air or exhaust air from an enclosed space (e.g., building) that the system 100 is used to supply, or a combination of two or more of outside, exhaust, and return air. After absorbing the water from the air, the liquid desiccant stream is diluted and output from the air contactor 120. The diluted liquid desiccant stream is then cycled back to the electrochemical regeneration system 110 for regeneration (i.e., increased concentration of liquid desiccant).

In addition, a dehumidified air stream 104 (e.g., having a lower relative humidity than air stream 102) is output from the air contactor 120. A heat transfer system 130 can be used to remove sensible heat from the air to supply a conditioned air stream 106 to the enclosed space (i.e., building).

In systems with a single air contactor, there is a single solution stream between the electrochemical regeneration system and the air contactor. The concentrated liquid desiccant solution enters the air contactor at the highest needed concentration and leaves at some lower concentration of liquid desiccant. In these systems, a high flow rate of solution has a low concentration change across the air contactor and requires more energy to concentrate the solution. However, there may be less need for integration with heat rejection. Alternatively, low flow rates of the solution provide an increased, or maximum, concentration change across the air contactor and use less energy to concentrate the solution. However, additional temperature control for the air contactor may be needed. These operating conditions are better understood with a more detailed description of the electrochemical regeneration system.

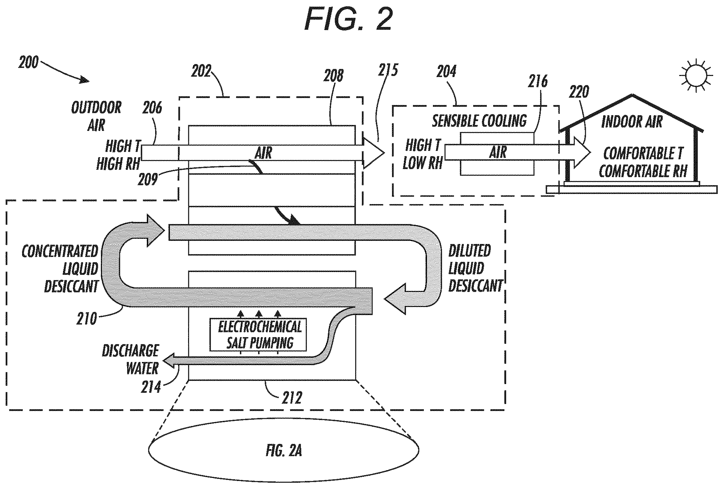

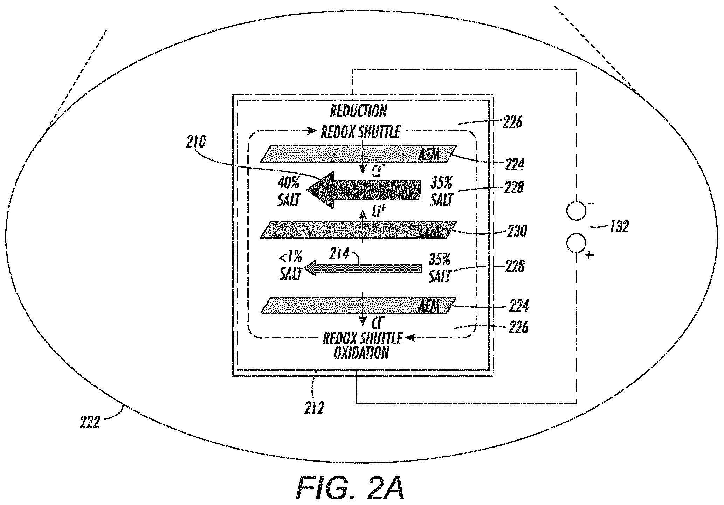

FIG. 2 illustrates a diagram of an electrodialytic liquid desiccant air conditioning (ELDAC) system 200 as described above in accordance with certain embodiments. The system 200 includes a desiccant section 202 and a cooling section 204. In the desiccant section 202, outdoor air 206 (and/or recirculated air) is forced across an air contactor 208 such as an air-liquid interface or liquid-carrying membrane dryer. In certain embodiments, the air 206 may be outside air of high temperature and high relative humidity (RH). Water 209 from the air 206 is absorbed at the air contactor 208 into a concentrated liquid desiccant 210, e.g., an aqueous salt solution, is then passed through a redox-assisted electrochemical regenerator 212 to separate dilute stream 214 (e.g., discharge water) and re-concentrate the desiccant stream 210. Example salts that may be used for the desiccant include, for example, LiCl, NaCl, LiBr, and CaCl₂.

The humidity is reduced in the air 215 leaving the desiccant section 202, wherein it is cooled by the cooling section 204. This cooling section 204 may include an evaporator 216 and other components not shown (e.g., condenser, compressor). Because the air 215 entering the cooling section 204 has lower relative humidity compared to the outside/recirculated air 206, the evaporator 216 is more efficient and can reduce the temperature of the cooled air 220 by a greater amount than if the evaporator 216 had to also condense moisture from the incoming air 215. Experimental results measuring the energy used by redox-assisted electrodialysis to concentrate ionic aqueous solutions show that ELDAC system 100 can have a regeneration specific heat input (RSHI) less than 0.05 kBTU/lb, which is up to 30 times lower than currently used thermal regeneration methods.

As seen in the detail view 222 of FIG. 2A, redox-assisted regenerator 212 has two outer ion exchange membranes 224 that separate the outer redox channels 226 from the inner concentrate 210 and dilute 214 streams. In this example the outer ion exchange membranes 224 are configured as anion exchange membranes (AEM). The concentrate 210 and dilute 214 streams are separated by a central ion exchange membrane 230, which in this example is a cation exchange membrane (CEM). In other configurations, the central ion exchange membrane 230 may be an AEM and the outer membranes 224 may be CEMs. An efficient membrane pair of one CEM and one AEM in the redox-assisted regenerator 212 has a Coulombic efficiency above 70%.

The four (or more) chambered desalination cell may use either one redox-active species that is circulated around the anode and cathode, where it undergoes faradaic reactions at both electrodes, or two redox-active species that are each confined to the anode or cathode respectively. An external voltage 132 induces oxidation or reduction in redox-active shuttle molecules, driving ion movement across the membranes 224, 230 without splitting water or producing other gaseous byproducts (e.g. chlorine) and creating two streams: re-concentrated desiccant 210 and discharge water 214. The percentages of salt concentrations shown in FIG. 2A are examples only - both inlets do not need to have the same concentration and the output concentrations may have a range of differences in concentrations. This goal can be achieved over multiple stages. One proposed redox shuttle is a positively charged ferrocene derivative such as (bis(trimethylammoniopropyl)ferrocene/bis(trimethylammoniopropyl) ferrocenium, [BTMAP-Fc]²⁺/[BTMAP-Fc]³⁺) 234, which is non-toxic, highly stable, has very rapid electrochemical kinetics and negligible membrane permeability. Other redox shuttle solutions may include ferrocyanide/ferricyanide ([Fe(CN)₆]⁴⁻/[Fe(CN)₆]³⁻) or a negatively charged ferrocene derivative. The moving parts of the system may include low pressure pumps for liquid circulation and fans for air circulation. Additional details of this type of four-channel, electrodialytic, stack with redox shuttle assist can be found in commonly-owned U.S. Patent No. 10,821,395, which is hereby incorporated by reference in its entirety.

Embodiments described herein utilize an electrochemical regenerator, as described above, in connection with two, or more, air contactors. Unlike the systems described above, which utilize a single air contactor and require a drain for discharge water, the systems with two, or more, air contactors do not require a drain. In the systems described further below, an electrochemical regenerator reconcentrates one or more liquid desiccants, which are supplied to at least one air contactor that dehumidifies air and to at least one air contactor that humidifies air. The at least one humidifying air contactor is at least partially fed from the desalinate stream of the electrochemical regenerator.

The systems described herein provide efficiencies over both thermally regenerated liquid desiccant dehumidifying systems as well as electrochemically regenerated liquid desiccant dehumidifying systems utilizing a single air contactor. For example, embodiments described herein reduce energy consumption. In thermally regenerated systems, regeneration is carried out solely through evaporation of water, a process that requires more energy than utilizing a two-step, combination electrochemical-evaporative regeneration method. In electrochemical systems with a single air contactor, the desalinate stream must be reduced to desiccant concentrations that are considered safe to discharge. However, the amount of energy required for desalination is proportional to the level of desalination such that further desalination requires increasing amounts of energy. In contrast, the multiple air contactor systems described herein need only electrochemically regenerate the diluted desiccant solution to a level that can be further regenerated by available air streams. For many climates and conditions, this desiccant concentration level is higher than that required of discharge streams, reducing energy consumption by the system.

The systems described herein further reduce system costs and complication. In single air contactor electrochemical systems, the desalination concentration level is proportional to the size of the electrochemical membrane; however, electrochemical membranes are significantly more expensive than air contactor materials. Since the described systems do not need to reduce the desalination concentration level as much as in single air contactor electrochemical systems, smaller electrochemical membranes may be utilized, thereby reducing material costs. There are also operating costs related to discharging the desiccant/water of a single air contactor electrochemical system since those systems cannot fully remove desiccant and require that at least some portion be discharged from the system. The systems described herein utilize at least a second air contactor to further regenerate the diluted desiccant solution, which eliminates the need to discharge water/desiccant. By removing the need to discharge water with trace desiccants, the systems described herein eliminate the need for a drain. This makes the system installation more flexible and efficient. Various systems utilizing an electrochemical regeneration system in combination with two or more air contactors are further described below.

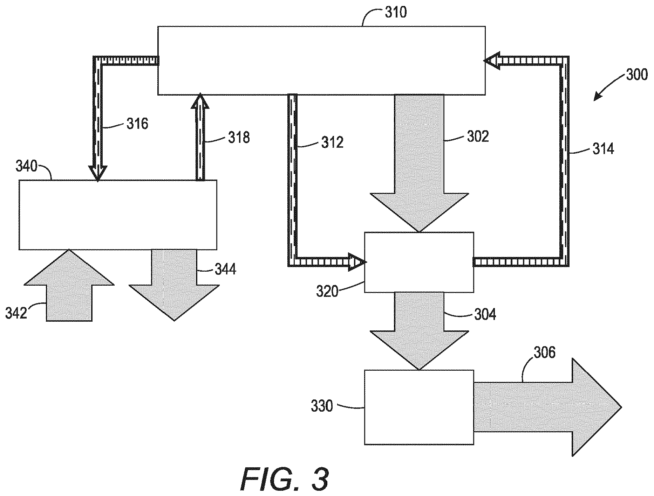

FIG. 3 illustrates a dehumidification system 300 utilizing an electrochemical regeneration system 310 in conjunction with two air contactors 320, 340. The regeneration system 310 operates as described above in connection with Figs. 2 and 2A, unless otherwise described. The electrochemical regeneration system 310 outputs a concentrated solution of liquid desiccant (e.g., an aqueous salt solution) 312 to a first air contactor 320 (e.g., a liquid to air mass and energy exchanger, including a membrane energy exchanger), which in certain embodiments is a dehumidifying air contactor. The concentrated solution of liquid desiccant may have a range of concentrations, depending upon the system design, from about 20-40 %. Air 302 is flowed over the concentrated solution of liquid desiccant either directly or via a membrane where water from the air stream is absorbed by the liquid desiccant stream. The air stream 302 may be outside (e.g., ambient) air, return air from an enclosed space (e.g., building) that the system 300 is used to supply, exhaust air from the building, or a combination of these, and the air stream 302 has a first water concentration. The water concentration of an air stream, as used to herein, refers to the absolute humidity of the air. After absorbing the water from the air 302, the liquid desiccant stream is diluted and the diluted solution stream 314 is output from the first air contactor 320. The diluted liquid desiccant stream 314 is then cycled back to the electrochemical regeneration system 310 for regeneration (i.e., increased concentration of liquid desiccant).

The first air contactor 320 also outputs a dehumidified air stream 304 (e.g., having a lower relative humidity/lower water concentration than air stream 302). A heat transfer system 330 removes sensible heat from the air to supply a conditioned air stream 306 to an enclosed space (i.e., building). In other embodiments, sensible heat is removed earlier in the system for improved thermodynamic efficiencies. Sensible heat refers to the amount of energy needed to increase, or in this case decrease, the temperature of the air stream 304 independent of phase changes. The heat transfer system 330 may include any type of known heat exchange system such as vapor compression, indirect evaporative cooling, chilled water or glycol, and/or heat pipes.

To keep the system supplied with the concentrated stream of liquid desiccant solution 312, the electrochemical regeneration system 310 regenerates the diluted liquid desiccant stream 314 received from the first air contactor 320. As described above, the regeneration system 310 outputs the concentrated stream 312 as well as a second, less concentrated stream 316. Output stream 316 has a concentration of liquid desiccant lower than that of stream 312, and in certain embodiments, output stream 316 has a concentration in a range of about 1-20 %. This second, less concentrated output stream 316 is fed, directly or indirectly, to a second air contactor 340, which in certain embodiments is a humidifying air contactor. Similar to air contactor 320, air contactor 340 may be a liquid to air mass and energy exchanger, including a membrane energy exchanger.

Air 342 is flowed over the concentrated output stream 316 from the regeneration system 310, either directly or via a membrane, where water from the output stream 316 is absorbed by the air stream 342. The air stream 342 is outside air from the environment, or exhaust air as discussed further below, and received from outside of the dehumidification system 300 components. The resulting humidified air is output from the second air contactor 340 as an output, humidified air stream 344 that is returned to the environment external to the components of the dehumidification system 300. The resulting concentrated liquid desiccant stream 318 is then cycled back to the electrochemical regeneration system 310 for further regeneration. The second air contactor liquid desiccant output stream 318 has a concentration of liquid desiccant higher than that of stream 316, and in certain embodiments, second air contactor output stream 318 has a concentration in a range of about 2-35 %.

FIG. 3 is a block diagram to illustrate the flows of liquid desiccant solutions and multiple air streams through the dehumidification system 300. While each of these flows may occur simultaneously, the timing of various portions the system may also be individually controlled. For example, the air contactors 320, 340 and/or electrochemical regeneration system 310 may be operated simultaneously, or in various combinations. The system may include storage containers, with or without bypass valves, at various positions throughout the system to store/contain diluted and/or regenerated solutions of liquid desiccant to take advantage of energy savings (e.g,, to operate energy intensive portions of the system during off-peak or less expensive times).

Embodiments consistent with FIG. 3 utilize external air to regenerate the liquid desiccant in the second air contactor 340. Therefore, the second air contactor may be limited to operating in environments where the outside air can accept humidity (e.g., drier climates). It may also be difficult to control the driving pressure in these embodiments. Additional systems utilizing an electrochemical regeneration system in combination with two or more air contactors are described below.

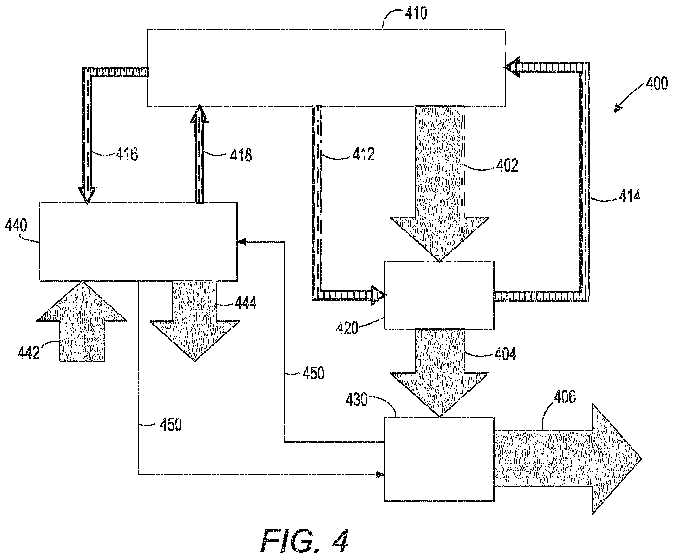

FIG. 4 illustrates a dehumidification system 400 utilizing an electrochemical regeneration system 410 in conjunction with two air contactors 420, 440. The regeneration system 410 operates as described above in connection with Figs. 2 and 2A, unless otherwise described. The electrochemical regeneration system 410 outputs a concentrated solution of liquid desiccant (e.g., an aqueous salt solution) 412 to a first air contactor 420 (e.g., a liquid to air mass and energy exchanger, including a membrane energy exchanger), which in certain embodiments is a dehumidifying air contactor. The concentrated solution of liquid desiccant may have a range of concentrations, depending upon the system design, from about 20-40 %. Air 402 is flowed over the concentrated solution of liquid desiccant either directly or via a membrane where water from the air stream is absorbed by the liquid desiccant stream. The air stream 402 may be outside air, return air from an enclosed space (e.g., building) that the system 400 is used to supply, exhaust air from the building, or a combination of these. After absorbing the water from the air 402, the liquid desiccant stream is diluted and the diluted solution stream 414 is output from the first air contactor 420. The diluted liquid desiccant stream 414 is then cycled back to the electrochemical regeneration system 410 for regeneration (i.e., increased concentration of liquid desiccant).

To keep the system supplied with the concentrated stream of liquid desiccant solution 412, the electrochemical regeneration system 410 regenerates the diluted liquid desiccant stream 414 received from the first air contactor 420. As described above, the regeneration system 410 outputs the concentrated stream 412 as well as a second, less concentrated stream 416. Output stream 416 has a concentration of liquid desiccant lower than that of stream 412, and in certain embodiments, output stream 416 has a concentration in a range of about 1-20 %. This second, less concentrated output stream 416 is fed, directly or indirectly, to a second air contactor 440, which in certain embodiments is a humidifying air contactor. Similar to air contactor 420, air contactor 440 may be a liquid to air mass and energy exchanger, including a membrane energy exchanger.

Air 442 is flowed over the concentrated output stream 416 from the regeneration system 410, either directly or via a membrane, where water from the output stream 416 is absorbed by the air stream 442. The air stream 442 is outside air from the environment, or exhaust air from the building as discussed further below and received from outside of the dehumidification system 400 components. The resulting humidified air is heated, as discussed further below, and output from the second air contactor 440 as an output, heated, humidified air stream 444 that is returned to the environment external to the components of the dehumidification system 400. The resulting concentrated liquid desiccant stream 418 is then cycled back to the electrochemical regeneration system 410 for further regeneration. The second air contactor liquid desiccant output stream 418 has a concentration of liquid desiccant higher than that of stream 416, and in certain embodiments, second air contactor output stream 418 has a concentration in a range of about 2-35 %.

The first air contactor 420 also outputs a dehumidified air stream 404 (e.g., having a lower relative humidity than air stream 402). A heat transfer system 430 removes sensible heat from the air to supply a conditioned air stream 406 to an enclosed space (i.e., building). The heat transfer system 430 may be a vapor evaporator to remove sensible heat from the dehumidified air stream 404. The heat transfer system 430 is coupled to the second air contactor 440 by a condenser or a hot gas loop 450. Therefore, the sensible heat removed from the dehumidified air stream 404 is transferred to the second air contactor 440 to heat the humidified air stream 444. The sensible heat transfer may be performed inside the mass and energy exchanger/second air contactor 440 so that the heat transfer and mass exchange occur approximately simultaneously, using a heat exchanger to pre-heat concentrated desiccant output stream 416, using a heat exchanger to pre-heat air stream 442, or a combination of any two or more of these techniques.

FIG. 4 is a block diagram to illustrate the flows of liquid desiccant solutions, multiple air streams, and heat through the dehumidification system 400. While each of these flows may occur simultaneously, the timing of various portions the system may also be individually controlled. For example, the air contactors 420, 440 and/or electrochemical regeneration system 410 may be operated simultaneously, or in various combinations. The system may include storage containers, with or without bypass valves, at various positions throughout the system to store/contain diluted and/or regenerated solutions of liquid desiccant to take advantage of energy savings (e.g,, to operate energy intensive portions of the system during off-peak or less expensive times).

Embodiments consistent with FIG. 4 utilize external air to regenerate the liquid desiccant in the second air contactor 440 along with a condenser. By raising the temperature of the outside air in the second air contactor 440, the humidity capacity of the outside air is also increased. The increased capacity allows for humidity rejection at a wider range of relative humidity levels. The increased heat also leads to evaporation, which helps cool the condenser (i.e., reject heat) without incurring additional operating costs. Additional systems utilizing an electrochemical regeneration system in combination with two or more air contactors are described below.

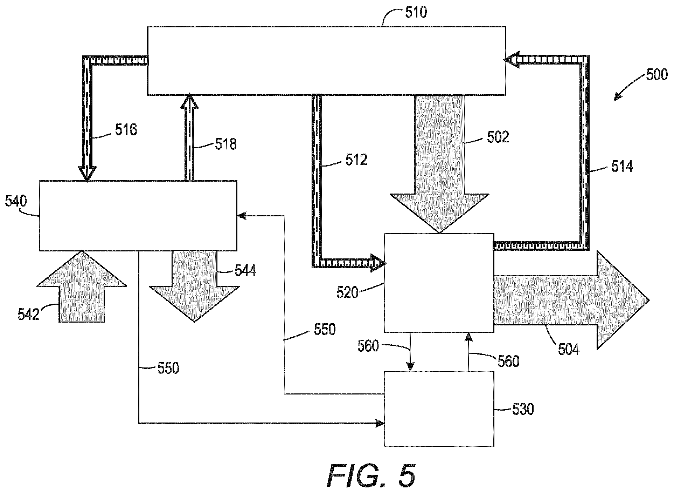

FIG. 5 illustrates a dehumidification system 500 utilizing an electrochemical regeneration system 510 in conjunction with two air contactors 520, 540. The regeneration system 510 operates as described above in connection with Figs. 2 and 2A, unless otherwise described. The electrochemical regeneration system 510 outputs a concentrated solution of liquid desiccant (e.g., an aqueous salt solution) 512 to a first air contactor 520 (e.g., a liquid to air mass and energy exchanger, including a membrane energy exchanger), which in certain embodiments is a dehumidifying air contactor. The concentrated solution of liquid desiccant may have a range of concentrations, depending upon the system design, from about 20-40 %. Air 502 is flowed over the concentrated solution of liquid desiccant either directly or via a membrane where water from the air stream is absorbed by the liquid desiccant stream. The air stream 502 may be outside air, return air from an enclosed space (e.g., building) that the system 500 is used to supply, exhaust air from the building, or a combination of these. After absorbing the water from the air 502, the liquid desiccant stream is diluted and the diluted solution stream 514 is output from the first air contactor 520. The diluted liquid desiccant stream 514 is then cycled back to the electrochemical regeneration system 510 for regeneration (i.e., increased concentration of liquid desiccant).

To keep the system supplied with the concentrated stream of liquid desiccant solution 512, the electrochemical regeneration system 510 regenerates the diluted liquid desiccant stream 514 received from the first air contactor 520. As described above, the regeneration system 510 outputs the concentrated stream 512 as well as a second, less concentrated stream 516. Output stream 516 has a concentration of liquid desiccant lower than that of stream 512, and in certain embodiments, output stream 516 has a concentration in a range of about 1-20 %. This second, less concentrated output stream 516 is fed, directly or indirectly, to a second air contactor 540, which in certain embodiments is a humidifying air contactor. Similar to air contactor 520, air contactor 540 may be a liquid to air mass and energy exchanger, including a membrane energy exchanger.

Air 542 is flowed over the concentrated output stream 516 from the regeneration system 510, either directly or via a membrane, where water from the output stream 516 is absorbed by the air stream 542. The air stream 542 is outside air from the environment and received from outside of the dehumidification system 500 components. The resulting humidified air is heated, as discussed further below, and output from the second air contactor 540 as an output, heated, humidified air stream 544 that is returned to the environment external to the components of the dehumidification system 500. The resulting concentrated liquid desiccant stream 518 is then cycled back to the electrochemical regeneration system 510 for further regeneration. The second air contactor liquid desiccant output stream 518 has a concentration of liquid desiccant higher than that of stream 516, and in certain embodiments, second air contactor output stream 518 has a concentration in a range of about 2-35 %.

The first air contactor 520 also outputs a dehumidified air stream 504 (e.g., having a lower relative humidity than air stream 502) that is also cooled. A heat transfer system 530 is fully coupled to both the first air contactor 520 and the second air contactor 540. The heat transfer system 530 may be a vapor condenser coupled to the first air contactor 520 to remove sensible heat from the first air contactor 520 through an evaporation loop 560. The heat transfer system 530 is also coupled to the second air contactor 540 by a condenser or a hot gas loop 550. Therefore, the sensible heat removed from the first air contactor 520 is transferred to the second air contactor 540 to heat the humidified air stream 544. By removing the sensible and latent heat in the first air contactor 520, a conditioned, and cooled, air stream 506 is supplied to an enclosed space (i.e., building). The heat transfer may be performed using any one, or combination, of the techniques described above in connection with FIG. 4.

FIG. 5 is a block diagram to illustrate the flows of liquid desiccant solutions, multiple air streams, and heat through the dehumidification system 500. While each of these flows may occur simultaneously, the timing of various portions the system may also be individually controlled. For example, the air contactors 520, 540 and/or electrochemical regeneration system 510 may be operated simultaneously, or in various combinations. The system may include storage containers, with or without bypass valves, at various positions throughout the system to store/contain diluted and/or regenerated solutions of liquid desiccant to take advantage of energy savings (e.g,, to operate energy intensive portions of the system during off-peak or less expensive times).

Similar to embodiments consistent with FIG. 4, embodiments consistent with FIG. 5 utilize external air to regenerate the liquid desiccant in the second air contactor 540 along with a vapor condenser. By raising the temperature of the outside air in the second air contactor 540, the humidity capacity of the outside air is also increased. The increased capacity allows for humidity rejection at a wider range of relative humidity levels. Coupling the heat transfer system 530 to both air contactors 520, 540 eliminates the need for other condensers and/or evaporators. The coupling also addresses the temperature of the final concentration stage to increase, or maximize, the efficiency of both the heat transfer system 530 and the electrochemical regeneration system 510. Additional systems utilizing an electrochemical regeneration system in combination with two or more air contactors are described below.

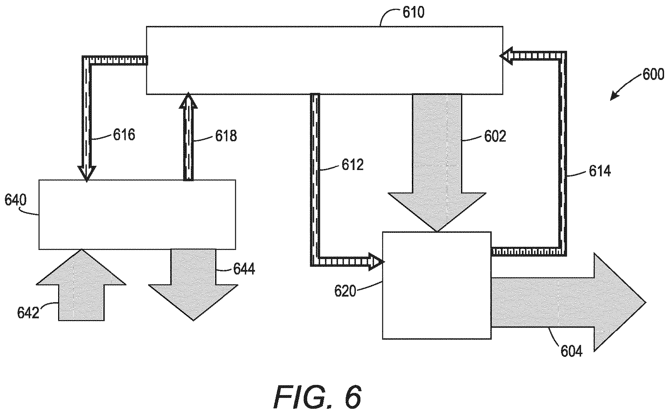

FIG. 6 illustrates a dehumidification system 600 utilizing an electrochemical regeneration system 610 in conjunction with two air contactors 620, 640. The regeneration system 610 operates as described above in connection with Figs. 2 and 2A, unless otherwise described. The electrochemical regeneration system 610 outputs a concentrated solution of liquid desiccant (e.g., an aqueous salt solution) 612 to a first air contactor 620 (e.g., a liquid to air mass and energy exchanger, including a membrane energy exchanger), which in certain embodiments is a dehumidifying air contactor. The concentrated solution of liquid desiccant may have a range of concentrations, depending upon the system design, from about 20-40 %. Air 602 is flowed over the concentrated solution of liquid desiccant either directly or via a membrane where water from the air stream is absorbed by the liquid desiccant stream. The air stream 602 may be outside air, return air from an enclosed space (e.g., building) that the system 600 is used to supply, or a combination of outside and return air. After absorbing the water from the air 602, the liquid desiccant stream is diluted and the diluted solution stream 614 is output from the first air contactor 620. The diluted liquid desiccant stream 614 is then cycled back to the electrochemical regeneration system 610 for regeneration (i.e., increased concentration of liquid desiccant).

To keep the system supplied with the concentrated stream of liquid desiccant solution 612, the electrochemical regeneration system 610 regenerates the diluted liquid desiccant stream 614 received from the first air contactor 620. As described above, the regeneration system 610 outputs the concentrated stream 612 as well as a second, less concentrated stream 616. Output stream 616 has a concentration of liquid desiccant lower than that of stream 612, and in certain embodiment, output stream 616 has a concentration in a range of about 1-20 %. This second, less concentrated output stream 616 is fed, directly or indirectly, to a second air contactor 640, which in certain embodiments is a humidifying air contactor. Similar to air contactor 620, air contactor 640 may be a liquid to air mass and energy exchanger, including a membrane energy exchanger.

Air 642 is flowed over the concentrated output stream 616 from the regeneration system 610, either directly or via a membrane, where water from the output stream 616 is absorbed by the air stream 642. The air stream 642 is exhaust air, which is air exhausted from the building. Because the exhaust air has been previously treated by the dehumidification system 600 to be at comfortable conditions, the exhaust air 642 likely has a lower humidity than outdoor air so it has a greater capacity to absorb water from the liquid desiccant. The resulting humidified air has increased latent heat and is output from the second air contactor 640 as an output, heated, humidified air stream 644 that is returned to the environment external to the components of the dehumidification system 600. The resulting concentrated liquid desiccant stream 618 is then cycled back to the electrochemical regeneration system 610 for further regeneration. The second air contactor liquid desiccant output stream 618 has a concentration of liquid desiccant higher than that of stream 616, and in certain embodiments, second air contactor output stream 618 has a concentration in a range of about 2-35 %.

The first air contactor 620 also outputs a dehumidified air stream 604 (e.g., having a lower relative humidity than air stream 602). While not shown, a heat transfer system removes sensible heat from the air to supply a conditioned (e.g., dehumidified and cooled) air stream 606 to an enclosed space (i.e., building). The heat transfer system may be a vapor evaporator utilizing outside air in stages to remove sensible heat from the dehumidified air stream 604. In various embodiments, the heat transfer system may involve the condenser only (e.g., as shown in FIG. 3), the condenser coupled with the second air contactor 640 (e.g., as shown in FIG. 4), or the condenser coupled with both the first and second air contactors 620, 640 (as shown in FIG. 5). The heat transfer may also be performed using any one, or combination, of the techniques described above in connection with FIG. 4.

FIG. 6 is a block diagram to illustrate the flows of liquid desiccant solutions, multiple air streams, and heat through the dehumidification system 600. While each of these flows may occur simultaneously, the timing of various portions the system may also be individually controlled. For example, the air contactors 620, 640 and/or electrochemical regeneration system 610 may be operated simultaneously, or in various combinations. The system may include storage containers, with or without bypass valves, at various positions throughout the system to store/contain diluted and/or regenerated solutions of liquid desiccant to take advantage of energy savings (e.g,, to operate energy intensive portions of the system during off-peak or less expensive times).

Embodiments consistent with FIG. 6 utilize exhaust air to regenerate the liquid desiccant in the second air contactor 640. In various embodiments, the contactor 640, or an additional contactor, may be placed remotely from the system 600, e.g., any location in the building where exhaust air is available and desiccant streams 616 and 618 can be piped from the remote collection location back to the main system 600. This could involve a smaller footprint as compared with the ductwork necessary to deliver exhaust air back to where the majority of the component of system 600 are located, and such architecture could be retrofitted with existing buildings. In further embodiments, air contactor 640 may be a plurality of air contactors placed at locations throughout a building (and remote from the above-discussed components of system 600) to collect exhaust air energy, all of which may be piped back to the remaining components of system 600.

Further, embodiments consistent with FIG. 6 utilize exhaust air to regenerate the liquid desiccant in the second air contactor 640. However, exhaust air may be incorporated in any fashion where input air is utilized in any of the embodiments discussed above in connection with FIGS. 3-5 as well. In addition, exhaust air energy exchange can be introduced to other parts of the system loop or staged with outside air. For example, an energy recovery ventilator (ERV) may be placed in air stream 602, which transfers heat and humidity from incoming outdoor air into the exhaust air in order to pre-treat the incoming air at no energy cost and lower the amount of work required by the system 600. In certain embodiments, sensible and latent heat exchange can be separated for the exhaust air. Additional systems utilizing an electrochemical regeneration system in combination with two or more air contactors are described below.

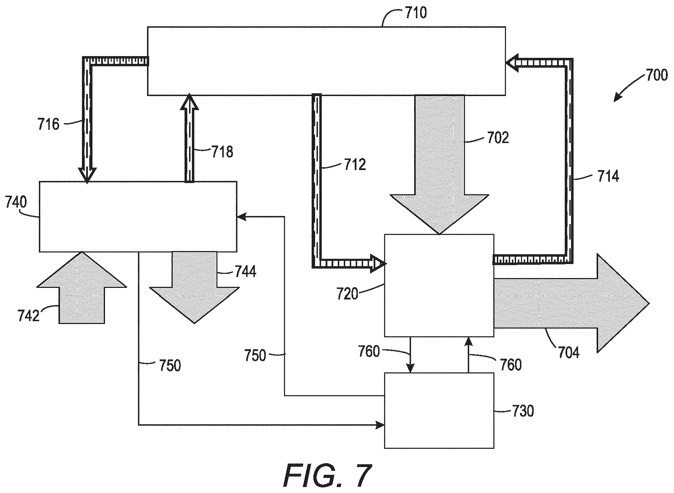

FIG. 7 illustrates a dehumidification system 700, similar to that illustrated in FIG. 5 but that utilizes exhaust air as described in connection with FIG. 6. The system 700 utilizes an electrochemical regeneration system 710 in conjunction with two air contactors 720, 740. The regeneration system 710 operates as described above in connection with Figs. 2 and 2A, unless otherwise described. The electrochemical regeneration system 710 outputs a concentrated solution of liquid desiccant (e.g., an aqueous salt solution) 712 to a first air contactor 720 (e.g., a liquid to air mass and energy exchanger, including a membrane energy exchanger), which in certain embodiments is a dehumidifying air contactor. The concentrated solution of liquid desiccant may have a range of concentrations, depending upon the system design, from about 20-40 %. Air 702 is flowed over the concentrated solution of liquid desiccant either directly or via a membrane where water from the air stream is absorbed by the liquid desiccant stream. The air stream 702 may be outside air, return air from an enclosed space (e.g., building) that the system 700 is used to supply, exhaust air from the building, or a combination of these sources. After absorbing the water from the air 702, the liquid desiccant stream is diluted and the diluted solution stream 714 is output from the first air contactor 720. The diluted liquid desiccant stream 714 is then cycled back to the electrochemical regeneration system 710 for regeneration (i.e., increased concentration of liquid desiccant).

To keep the system supplied with the concentrated stream of liquid desiccant solution 712, the electrochemical regeneration system 710 regenerates the diluted liquid desiccant stream 714 received from the first air contactor 720. As described above, the regeneration system 710 outputs the concentrated stream 712 as well as a second, less concentrated stream 716. Output stream 716 has a concentration of liquid desiccant lower than that of stream 712, and in certain embodiments, output stream 716 has a concentration in a range of about 1-20 %. This second, less concentrated output stream 716 is fed, directly or indirectly, to a second air contactor 740, which in certain embodiments is a humidifying air contactor. Similar to air contactor 720, air contactor 740 may be a liquid to air mass and energy exchanger, including a membrane energy exchanger.

Air 742 is flowed over the concentrated output stream 716 from the regeneration system 710, either directly or via a membrane, where water from the output stream 716 is absorbed by the air stream 742. The air stream 742 is exhaust air, which is air exhausted from the dehumidification system 700. Because the exhaust air has been dehumidified and heated by the system, it has an increased capacity to accept humidity from the liquid desiccant. The resulting humidified air has increased latent heat and is output from the second air contactor 740 as an output, heated, humidified air stream 744 that is returned to the environment external to the components of the dehumidification system 700. The resulting concentrated liquid desiccant stream 718 is then cycled back to the electrochemical regeneration system 710 for further regeneration. The second air contactor liquid desiccant output stream 718 has a concentration of liquid desiccant higher than that of stream 716, and in certain embodiments, second air contactor output stream 718 has a concentration in a range of about 2-35 %.

The first air contactor 720 also outputs a dehumidified air stream 704 (e.g., having a lower relative humidity than air stream 702) that is also cooled. A heat transfer system 730 is fully coupled to both the first air contactor 720 and the second air contactor 740. The heat transfer system 730 may be a vapor condenser coupled to the first air contactor 720 to remove sensible heat from the first air contactor 720 through an evaporation loop 760. The heat transfer system 730 is also coupled to the second air contactor 740 by a condenser or a hot gas loop 750. Therefore, the sensible heat removed from the first air contactor 720 is transferred to the second air contactor 740 to heat the humidified air stream 744. By removing the sensible and latent heat in the first air contactor 720, a conditioned, and cooled, air stream 706 is supplied to an enclosed space (i.e., building). The heat transfer may be performed using any one, or combination, of the techniques described above in connection with FIG. 4.

FIG. 7 is a block diagram to illustrate the flows of liquid desiccant solutions, multiple air streams, and heat through the dehumidification system 700. While each of these flows may occur simultaneously, the timing of various portions the system may also be individually controlled. For example, the air contactors 720, 740 and/or electrochemical regeneration system 710 may be operated simultaneously, or in various combinations. The system may include storage containers, with or without bypass valves, at various positions throughout the system to store/contain diluted and/or regenerated solutions of liquid desiccant to take advantage of energy savings (e.g,, to operate energy intensive portions of the system during off-peak or less expensive times).

Embodiments consistent with FIG. 7 utilize exhaust air to regenerate the liquid desiccant in the second air contactor 740. However, exhaust air may be incorporated in any fashion where input air is utilized in any of the embodiments discussed above in connection with FIG. 6. In addition, exhaust air energy exchange can be introduced to other parts of the system loop or staged with outside air. For example, an energy recovery ventilator (ERV) may be placed in air stream 602, which transfers heat and humidity from incoming outdoor air into the exhaust air in order to pre-treat the incoming air at no energy cost and lower the amount of work required by the system 600. In certain embodiments, sensible and latent heat exchange can be separated for the exhaust air. Additional systems utilizing an electrochemical regeneration system in combination with two or more air contactors are described below.

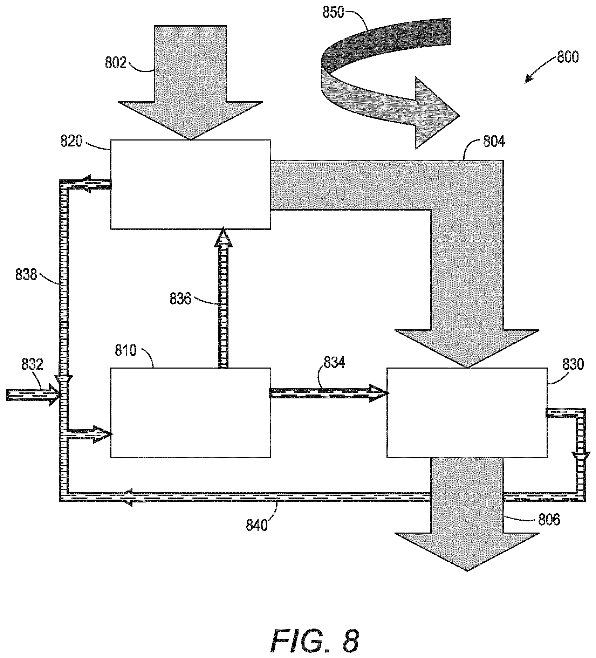

FIG. 8 illustrates a dehumidification system 800 utilizing an electrochemical regeneration system 810 in conjunction with two air contactors 820, 840. The system 800 may be suited for hot, humid operating conditions, such as tropical climates. The regeneration system 810 operates as described above in connection with Figs. 2 and 2A, unless otherwise described. The electrochemical regeneration system 810 outputs a concentrated solution of liquid desiccant (e.g., an aqueous salt solution) 836 to a first air contactor 820 (e.g., a liquid to air mass and energy exchanger, including a membrane energy exchanger), which in certain embodiments is a dehumidifying air contactor. The concentrated solution of liquid desiccant may have a range of concentrations, depending upon the system design, from about 20-40 %. Hot, humid air 802 is flowed over the concentrated solution of liquid desiccant either directly or via a membrane where water from the air stream is absorbed by the liquid desiccant stream in an amount to over dehumidify the air (e.g., lower the water concentration in the air to a level less than a level used for supplying an enclosure). The air stream 802 may be outside air or a combination of outside air with return and/or exhaust air. After absorbing the water from the air 802, the liquid desiccant stream is diluted and the diluted solution stream 838 is output from the first air contactor 820. The diluted liquid desiccant stream 838 is then cycled back to the electrochemical regeneration system 810 for regeneration (i.e., increased concentration of liquid desiccant).

To keep the system 800 supplied with the concentrated stream of liquid desiccant solution 836, the electrochemical regeneration system 810 regenerates the diluted liquid desiccant stream 838 received from the first air contactor 820. As described above, the regeneration system 810 outputs the concentrated stream 836 as well as a second, less concentrated stream 834. The electrochemical regeneration system 810 includes a water connection for receiving a water input 832. The water stream 832 further dilutes the less concentrated stream 834 to form a weak liquid desiccant solution. The weak solution 834 has a concentration of liquid desiccant lower than that of stream 836, and in certain embodiments, output stream 834 has a concentration in a range of about 1-20 %. This second, less concentrated output stream 834 is fed, directly or indirectly, to a second air contactor 830, which in certain embodiments is an evaporative and cooling air contactor. Similar to air contactor 820, air contactor 830 may be a liquid to air mass and energy exchanger, including a membrane energy exchanger.

The first air contactor 820 also outputs an over-dehumidified air stream 804 (e.g., having a lower relative humidity than air stream 802). A heat transfer system 850 removes sensible heat from the first air contactor 820, from the over dehumidified air stream 804, or both to reject heat to outside air. The over dehumidified air stream 804 is flowed over the weak output stream 834 from the regeneration system 810, either directly or via a membrane, where water from the output stream 834 is absorbed by the air stream 804 to evaporatively cool the air stream 804. The cooled, slightly re-humidified, conditioned air stream 806 is output to supply an enclosed space (i.e., building).

The second air contactor 830 also outputs the resulting concentrated liquid desiccant stream 840 and cycles stream 840 back to the electrochemical regeneration system 810 for further regeneration with output stream 838 and the water input 832. The second air contactor liquid desiccant output stream 840 has a concentration of liquid desiccant higher than that of stream 834, and in certain embodiments, second air contactor output stream 840 has a concentration in a range of about 2-35 %.

FIG. 8 is a block diagram to illustrate the flows of liquid desiccant solutions and an air stream through the dehumidification system 800. While each of these flows may occur simultaneously, the timing of various portions the system may also be individually controlled. For example, the air contactors 820, 830 and/or electrochemical regeneration system 810 may be operated simultaneously, or in various combinations. The system may include storage containers, with or without bypass valves, at various positions throughout the system to store/contain diluted and/or regenerated solutions of liquid desiccant to take advantage of energy savings (e.g,, to operate energy intensive portions of the system during off-peak or less expensive times).

Embodiments consistent with FIG. 8 utilize evaporative cooling to produce a conditioned air stream. In certain embodiments, instead of rejecting heat to outside or exhaust air, at least a portion can be used to cool air through further evaporation. Also, any of the integrations discussed above in connection with FIGS. 3-7 may be incorporated into the embodiments of FIG. 8, such as one or more heat transfer systems.

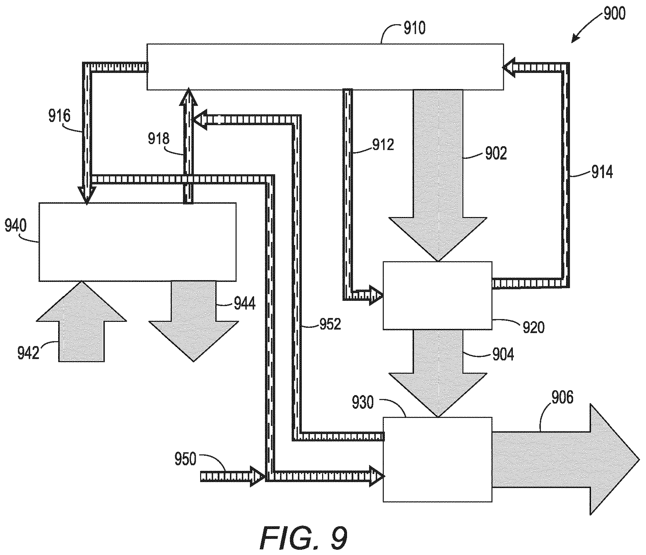

While each of the above-discussed systems involve combinations of an electrochemical regeneration system with two air contactors, it should be understood that each of the systems can be adapted to include three, or more, air contactors. An example of such a system is provided in FIG. 9.

FIG. 9 illustrates a dehumidification system 900 utilizing an electrochemical regeneration system 910 in conjunction with three air contactors 920, 940, and 930. The regeneration system 910 operates as described above in connection with Figs. 2 and 2A, unless otherwise described. The electrochemical regeneration system 910 outputs a concentrated solution of liquid desiccant (e.g., an aqueous salt solution) 912 to a first air contactor 920 (e.g., a liquid to air mass and energy exchanger, including a membrane energy exchanger), which in certain embodiments is a dehumidifying air contactor. The concentrated solution of liquid desiccant may have a range of concentrations, depending upon the system design, from about 20-40 %. Air 902 is flowed over the concentrated solution of liquid desiccant either directly or via a membrane where water from the air stream is absorbed by the liquid desiccant stream. The air stream 902 may be outside air, return air from an enclosed space (e.g., building) that the system 900 is used to supply, exhaust air, or a combination of these. After absorbing the water from the air 902, the liquid desiccant stream is diluted and the diluted solution stream 914 is output from the first air contactor 920. The diluted liquid desiccant stream 914 is then cycled back to the electrochemical regeneration system 910 for regeneration (i.e., increased concentration of liquid desiccant).

To keep the system supplied with the concentrated stream of liquid desiccant solution 912, the electrochemical regeneration system 910 regenerates the diluted liquid desiccant stream 914 received from the first air contactor 920. As described above, the regeneration system 910 outputs the concentrated stream 912 as well as a second, less concentrated stream 916. Output stream 916 has a concentration of liquid desiccant lower than that of stream 912, and in certain embodiments, output stream 916 has a concentration in a range of about 1-20 %. This second, less concentrated output stream 916 is fed, directly or indirectly, to a second air contactor 940, which in certain embodiments is a humidifying air contactor. Similar to air contactor 920, air contactor 940 may be a liquid to air mass and energy exchanger, including a membrane energy exchanger.

Air 942 is flowed over the concentrated output stream 916 from the regeneration system 910, either directly or via a membrane, where water from the output stream 916 is absorbed by the air stream 942. The air stream 942 may be outside air, exhaust air, or a combination thereof. The resulting humidified air has increased latent heat and is output from the second air contactor 940 as an output, heated, humidified air stream 944 that is returned to the environment external to the components of the dehumidification system 900. The resulting concentrated liquid desiccant stream 918 is then cycled back to the electrochemical regeneration system 910 for further regeneration. The second air contactor liquid desiccant output stream 918 has a concentration of liquid desiccant higher than that of stream 916, and in certain embodiments, second air contactor output stream 918 has a concentration in a range of about 2-35 %.

The first air contactor 920 also outputs a dehumidified air stream 604 (e.g., having a lower relative humidity than air stream 902). The dehumidified air stream is input to a third air contactor 930, where the air stream 904 is flowed, directly or indirectly via a membrane, over a portion of liquid desiccant stream 916 mixed with water 950. Similar to air contactors 920, 940 air contactor 930 may be a liquid to air mass and energy exchanger, including a membrane energy exchanger. Water from the diluted liquid desiccant stream 916 is evaporated and absorbed by the air stream 904 thereby consuming heat to evaporatively cool the air stream 904. In other embodiments, sensible heat is removed through indirect evaporative cooling. The resulting cooled, conditioned air stream 906 is output to supply an enclosed space (i.e., building). Air contactor 930 then outputs a concentrated liquid desiccant stream 952 to combine with output stream 918, where the combined stream is cycled back to the electrochemical regeneration system 910 for further regeneration. The third air contactor liquid desiccant output stream 952 has a concentration of liquid desiccant higher than that of the combined input stream of water and stream 916.

FIG. 9 is a block diagram to illustrate the flows of liquid desiccant solutions, multiple air streams, and heat through the dehumidification system 900. While each of these flows may occur simultaneously, the timing of various portions the system may also be individually controlled. For example, the air contactors 920, 930, 940 and/or electrochemical regeneration system 910 may be operated simultaneously, or in various combinations. The system may include storage containers, with or without bypass valves, at various positions throughout the system to store/contain diluted and/or regenerated solutions of liquid desiccant to take advantage of energy savings (e.g,, to operate energy intensive portions of the system during off-peak or less expensive times).

As mentioned, features of the embodiments of FIGS. 3-8 may be incorporated in the triple air contactor configuration of FIG. 9 and vice versa. Further embodiments are not limited to three air contactors and may involve any number of air contactors, any number of staging desiccant flows, and/or any number of air flows.

FIGS. 3-8 each refer to a system comprising various components including at least one electrochemical regeneration system and two or more air contactors. These components may be included in a single housing or in multiple housings. In certain embodiments the components are co-located at one location in or near the enclosed space (e.g., building) that the system serves. However, in other embodiments one or more components may be located remote from the rest of the system components. For example, one or more air contactors may be positioned at one or more locations throughout a building proximate a location where exhaust air is generated, or released, and the output(s) of the remote air contactor(s) is transferred (e.g., via piping) back to where the remaining system components are co-located.

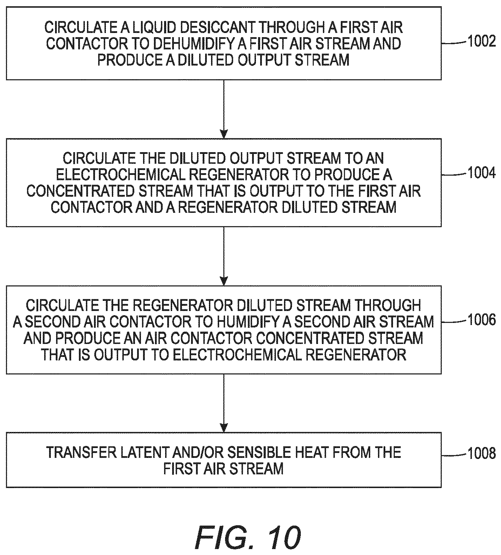

Turning to FIG. 10, a method for dehumidifying air using one, or more, of the systems described above is illustrated. A concentrated liquid desiccant stream is circulated through a first air contactor to dehumidify a first air stream and produce a diluted output stream of liquid desiccant 1002. The diluted output stream of liquid desiccant is circulated to an electrochemical regeneration system where a concentrated stream of liquid desiccant is produced to be output to the first air contactor, and a regenerator diluted liquid desiccant stream is produced 1004. The regenerator diluted liquid desiccant stream is circulated through a second air contactor to humidify a second air stream and produce an air contactor concentrated liquid desiccant stream that is output to the electrochemical regenerator 1006. Sensible and/or latent heat is transferred from at least the dehumidified air stream 1008. The heat may be transferred outside the system, or it may be recycled to the second air contactor to facilitate regeneration of the liquid desiccant through evaporation.

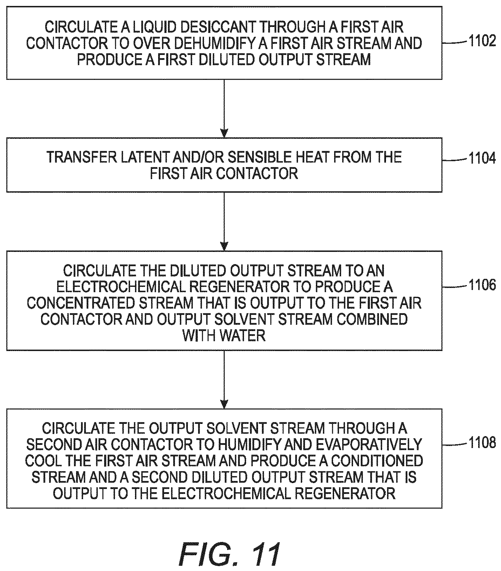

FIG. 11 illustrates another method, according to various embodiments, for dehumidifying air using one, or more of the systems described above. A concentrated liquid desiccant stream is circulated through a first air contactor to over-dehumidify a first air stream and produce a diluted output stream of liquid desiccant 1102. Sensible and/or latent heat is transferred to outside air from the first air contactor, from the dehumidified air stream, or both 1104. The diluted output stream is circulated to an electrochemical regenerator to produce a concentrated liquid desiccant stream that is output to the first air contactor and an output solvent stream having a lower concentration of liquid desiccant combined with water 1106. The output solvent stream is circulated through a second air contactor to humidify and evaporatively cool the over-dehumidified air stream 1108. The second air contactor produces a conditioned air stream to supply to an enclosed space (e.g., building) and produces a second diluted output stream that has a higher liquid desiccant concentration than the output solvent stream that is output to the electrochemical regenerator 1108. As discussed above, various portions of these methods may be performed simultaneously or in series with any combination of overlap among the various steps.

The systems described herein with respect to various embodiments involve an electrochemical regeneration system utilizing a redox-assisted electrodialytic cell in combination with two or more air contactors. These systems reduce energy consumption in electrochemically regenerated dehumidification and air conditioning systems, reduce system costs, increase the options for system operating ranges, and eliminate the loss of desiccant materials in the system. They provide increased efficiency and environmentally responsible options for meeting the expected, increased need for dehumidification and air conditioning systems.

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g. 1 to 5 includes 1, 1.5, 2, 2.75, 3, 3.80, 4, and 5) and any range within that range. Also, all uses of "%" with respect to concentrations in the application refer to weight percent (wt. %) unless otherwise indicated.

## Claims

1. A dehumidification system (300), comprising:
an electrochemical liquid desiccant regeneration system (310) comprising a first output desiccant stream (312), wherein the first output desiccant stream (312) has a first concentration of liquid desiccant; and
a first air contactor (320) coupled to the first output desiccant stream (312) disposing a first input air stream (302) having a first water concentration in fluid communication with the first output desiccant stream (312) to form a first output air stream (304) having a second water concentration lower than the first water concentration and a diluted desiccant output stream (314), wherein the diluted desiccant output stream (314) is circulated back into the electrochemical liquid desiccant regeneration system (310); the dehumidification system (300) being **characterized by**:
the electrochemical liquid desiccant regeneration system (310) further comprising a second output desiccant stream (316), wherein the second output desiccant stream (316) has a second concentration of liquid desiccant smaller than the first concentration; and by comprising,
a second air contactor (340) coupled to the second output desiccant stream (316) and disposing a second input air stream (342) having a third water concentration in fluid communication with the second output desiccant stream (316) to form a second output air stream (344) having a fourth water concentration higher than the third water concentration and a concentrated desiccant output stream (318), wherein the concentrated desiccant output stream (318) is circulated back into the electrochemical liquid desiccant regeneration system (310).

2. The system of claim 1, wherein the electrochemical liquid desiccant regeneration system is driven by an electric potential that engenders faradaic reactions happening at two different electrodes and material undergoing the faradaic reactions is circulated from one electrode to the other and back again.

3. The system of claim 1, wherein at least one of the first and second air contactors receives ambient air as an input from outside the system; or,
wherein at least one of the first and second air contactors receives return air or exhaust air as an input; or,
wherein at least one of the first and second air contactors is located remote from the electrochemical liquid desiccant regeneration system and receives exhaust air as an input at the remote location; or,
wherein at least one of the first and second air contactors exposes air to a liquid desiccant stream through an intervening membrane interface.

4. The system of claim 1, further comprising:
a heat transfer system coupled to at least one stream of a first group of streams including the first input air stream, the first output air stream, and the first output desiccant stream, and further coupled to at least one stream of a second group of streams including the second input air stream, the second output air stream, and the second output desiccant stream, wherein the heat transfer system is configured to transfer heat from at least one stream of the first group to at least one stream of the second group.

5. The system of claim 1, further comprising:
a heat transfer system coupled to the first air contactor and further coupled to the second air contactor to cool the liquid desiccant in the first air contactor and transfer heat to the second air contactor.

6. The system of claim 5, wherein the heat transfer system is configured to transfer heat from the first air contactor using a first heat transfer method and to transfer heat to the second air contactor using a second heat transfer method, the second heat transfer method being different from the first heat transfer method; preferably,
wherein at least one of the heat transfer methods is evaporation.

7. The system of claim 1,
wherein the second output desiccant stream c is an output stream of a treatment system configured to treat the second output desiccant stream.

8. The system of claim 1, further comprising:
a third air contactor coupled to the second output desiccant stream and coupled to the first output air stream, disposing the first output air stream in fluid communication with an input stream comprising the second output desiccant stream to evaporatively cool the first output air stream to output a conditioned air stream having a fifth water concentration higher than the second water concentration and lower than the first water concentration and output a second concentrated desiccant output stream, wherein the second concentrated desiccant output stream is circulated back into the electrochemical liquid desiccant regeneration system.

9. The system of claim 8, further comprising:
a water source coupled to the second output desiccant stream and an inlet of the third air contactor, wherein water from the water source is mixed with the second output desiccant stream prior to entering the third air contactor.

10. The system of claim 8, wherein the second output desiccant output stream coupled to the electrochemical liquid desiccant regeneration system is an output stream of a treatment system configured to treat the second output desiccant stream; or,
wherein at least one of the first and second air contactors receives exhaust air as an input; or,
wherein operating parameters of the first and third air contactors are varied based on the first concentration of liquid desiccant in the first output desiccant stream.

11. A dehumidification system (800), comprising:
an electrochemical liquid desiccant regeneration system (810) comprising a first output desiccant stream (836), wherein the first output desiccant stream (836) has a first concentration of liquid desiccant; and
a first air contactor (820) coupled to the first output desiccant stream (836) disposing a first input air stream (802) having a first water concentration in fluid communication with the first output desiccant stream (836) to form a first output air stream (804) having a second water concentration lower than the first water concentration and a diluted desiccant output stream (838), wherein the diluted desiccant output stream is circulated back into the electrochemical liquid desiccant regeneration system (810); the dehumidification system (800) being **characterized by**:
the electrochemical liquid desiccant regeneration system (810) further comprising a second output desiccant stream (834), wherein the second output desiccant stream (834) has a second concentration of liquid desiccant smaller than the first concentration: and by comprising
a second air contactor (830) coupled to the second output desiccant stream (834) and the first output air stream (804) and disposing the first output air stream (804) in fluid communication with the second output desiccant stream (834) to evaporatively cool the first output air stream (804) to output a conditioned air stream (806) having a third water concentration higher than the second water concentration and lower than the first water concentration and a concentrated desiccant output stream (840), wherein the concentrated desiccant output stream (840) is circulated back into the electrochemical liquid desiccant regeneration system (810).

12. The system of claim 11, wherein the electrochemical liquid desiccant regeneration system includes an input water stream configured to dilute the second output desiccant stream; or,
wherein the first air contactor receives ambient air as an input from outside the system.

13. The system of claim 11, further comprising:
a heat transfer system coupled to the first air contactor configured to transfer heat to air outside the system.

14. The system of claim 11, further comprising:
a heat transfer system coupled to the first output air stream configured to transfer heat to air outside the system.

15. A method for dehumidifying air using a dehumidification system according to any one of claims 1 to 14, comprising:
circulating a first output desiccant stream (312) having a first concentration through a first air contactor (320);
flowing air across the first air contactor (320) such that the first output desiccant stream (312) absorbs water from the air, the first output desiccant stream (312) being diluted via absorption of the water to form a diluted desiccant output stream (314) having a second concentration that is less than the first concentration and a dehumidified air stream;
outputting the dehumidified air stream;
inputting the diluted desiccant output stream (314) to an electrodialytic regenerator and forming the first output desiccant stream (312) and a second output desiccant stream (316) having a third concentration, the third concentration being less than the first concentration;
outputting the first output desiccant stream (312) to the first air contactor (320);
outputting the second output desiccant stream (316) to a second air contactor (340);
circulating the second output desiccant stream (316) through the second air contactor (340);
flowing air across the second air contactor (340) such that the air absorbs water from the second output desiccant stream (316), the second output desiccant stream (316) being concentrated via loss of the water to form a concentrated desiccant output stream (318) having a fourth concentration that is higher than the third concentration and a humidified air stream;
inputting the concentrated desiccant output stream (318) to the electrodialytic regenerator; and
outputting the humidified air stream.

## Patentansprüche

1. Entfeuchtungssystem (300), umfassend:
ein zur elektrochemischen Regeneration eines flüssigen Trocknungsmittels dienendes System (310), das einen ersten Trocknungsmittelaustragsstrom (312) umfasst, wobei der erste Trocknungsmittelaustragsstrom (312) eine erste Konzentration von flüssigem Trocknungsmittel aufweist; und
einen ersten Luftkontaktor (320), der mit dem ersten Trocknungsmittelaustragsstrom (312) gekoppelt ist und der einen ersten Lufteintragsstrom (302), der eine erste Wasserkonzentration aufweist, in Fluidverbindung mit dem ersten Trocknungsmittelaustragsstrom (312) bringt, um einen ersten Luftaustragsstrom (304), der eine zweite Wasserkonzentration aufweist, die niedriger als die erste Wasserkonzentration ist, und einen verdünnten Trocknungsmittelaustragsstrom (314) auszubilden, wobei der verdünnte Trocknungsmittelaustragsstrom (314) in das zur elektrochemischen Regeneration eines flüssigen Trocknungsmittels dienende System (310) zurückgeführt wird; wobei das Entfeuchtungssystem (300) **dadurch gekennzeichnet ist, dass**
das zur elektrochemischen Regeneration eines flüssigen Trocknungsmittels dienende System (310) ferner einen zweiten Trocknungsmittelaustragsstrom (316) umfasst, wobei der zweite Trocknungsmittelaustragsstrom (316) eine zweite Konzentration von flüssigem Trocknungsmittel aufweist, die geringer als die erste Konzentration ist;
und dass es Folgendes umfasst:
einen zweiten Luftkontaktor (340), der mit dem zweiten Trocknungsmittelaustragsstrom (316) gekoppelt ist und einen zweiten Lufteintragsstrom (342), der eine dritte Wasserkonzentration aufweist, in Fluidverbindung mit dem zweiten Trocknungsmittelaustragsstrom (316) bringt, um einen zweiten Luftaustragsstrom (344), der eine vierte Wasserkonzentration aufweist, die höher als die dritte Wasserkonzentration ist, und einen konzentrierten Trocknungsmittelaustragsstrom (318) auszubilden, wobei der konzentrierte Trocknungsmittelaustragsstrom (318) in das zur elektrochemischen Regeneration eines flüssigen Trocknungsmittels dienende System (310) zurückgeführt wird.

2. System nach Anspruch 1, wobei das zur elektrochemischen Regeneration eines flüssigen Trocknungsmittels dienende System durch ein elektrisches Potential angetrieben wird, das bewirkt, dass es an zwei verschiedenen Elektroden zu faradayschen Reaktionen kommt, und Material, an dem die faradayschen Reaktionen erfolgen, von einer Elektrode zur anderen und wieder zurück geführt wird.

3. System nach Anspruch 1, wobei wenigstens einer aus dem ersten und zweiten Luftkontaktor Umgebungsluft als Eintrag von außerhalb des Systems empfängt; oder
wobei wenigstens einer aus dem ersten und zweiten Luftkontaktor Rückluft oder Abluft als Eintrag empfängt; oder
wobei wenigstens einer aus dem ersten und zweiten Luftkontaktor sich entfernt von dem zur elektrochemischen Regeneration eines flüssigen Trocknungsmittels dienenden System befindet und an dem entfernten Standort Abluft als Eintrag empfängt; oder
wobei wenigstens einer aus dem ersten und zweiten Luftkontaktor Luft über eine dazwischenliegende Membranschnittstelle einem Strom von flüssigem Trocknungsmittel aussetzt.

4. System nach Anspruch 1, ferner umfassend:
ein Wärmeübertragungssystem, das mit wenigstens einem Strom einer ersten Gruppe von Strömen, die den ersten Lufteintragsstrom, den ersten Luftaustragsstrom und den ersten Trocknungsmittelaustragsstrom umfasst, gekoppelt ist und ferner mit wenigstens einem Strom einer zweiten Gruppe von Strömen, die den zweiten Lufteintragsstrom, den zweiten Luftaustragsstrom und den zweiten Trocknungsmittelaustragsstrom umfasst, gekoppelt ist, wobei das Wärmeübertragungssystem dazu ausgestaltet ist, Wärme von wenigstens einem Strom der ersten Gruppe auf wenigstens einen Strom der zweiten Gruppe zu übertragen.

5. System nach Anspruch 1, ferner umfassend:
ein Wärmeübertragungssystem, das mit dem ersten Luftkontaktor gekoppelt ist und ferner mit dem zweiten Luftkontaktor gekoppelt ist, um das flüssige Trocknungsmittel in dem ersten Luftkontaktor zu kühlen und Wärme zu dem zweiten Luftkontaktor zu übertragen.

6. System nach Anspruch 5, wobei das Wärmeübertragungssystem dazu ausgestaltet ist, Wärme von dem ersten Luftkontaktor unter Verwendung eines ersten Wärmeübertragungsverfahrens zu übertragen und Wärme zu dem zweiten Luftkontaktor unter Verwendung eines zweiten Wärmeübertragungsverfahrens zu übertragen, wobei das zweite Wärmeübertragungsverfahren von dem ersten Wärmeübertragungsverfahren verschieden ist; vorzugsweise wobei wenigstens eines der Wärmeübertragungsverfahren Verdampfung ist.

7. System nach Anspruch 1,
wobei der zweite Trocknungsmittelaustragsstrom c ein Austragsstrom eines Behandlungssystems ist, das dazu ausgestaltet ist, den zweiten Trocknungsmittelaustragsstrom zu behandeln.

8. System nach Anspruch 1, ferner umfassend:
einen dritten Luftkontaktor, der mit dem zweiten Trocknungsmittelaustragsstrom gekoppelt ist und mit dem ersten Luftaustragsstrom gekoppelt ist und der den ersten Luftaustragsstrom in Fluidverbindung mit einem Eintragsstrom, der den zweiten Trocknungsmittelaustragsstrom umfasst, bringt, um den ersten Luftaustragsstrom durch Verdampfung zu kühlen, um einen aufbereiteten Luftstrom auszutragen, der eine fünfte Wasserkonzentration aufweist, die höher als die zweite Wasserkonzentration und niedriger als die erste Wasserkonzentration ist, und einen zweiten konzentrierten Trocknungsmittelaustragsstrom auszutragen, wobei der zweite konzentrierte Trocknungsmittelaustragsstrom in das zur elektrochemischen Regeneration eines flüssigen Trocknungsmittels dienende System zurückgeführt wird.

9. System nach Anspruch 8, ferner umfassend:
eine Wasserquelle, die mit dem zweiten Trocknungsmittelaustragsstrom und einem Einlass des dritten Luftkontaktors gekoppelt ist, wobei Wasser aus der Wasserquelle vor dem Eintreten in den dritten Luftkontaktor mit dem zweiten Trocknungsmittelaustragsstrom gemischt wird.

10. System nach Anspruch 8, wobei der zweite Trocknungsmittelaustragsstrom, der mit dem zur elektrochemischen Regeneration eines flüssigen Trocknungsmittels dienenden System gekoppelt ist, ein Austragsstrom eines Behandlungssystems ist, das dazu ausgestaltet ist, den zweiten Trocknungsmittelaustragsstrom zu behandeln; oder
wobei wenigstens einer aus dem ersten und zweiten Luftkontaktor Abluft als Eintrag empfängt; oder
wobei Betriebsparameter des ersten und dritten Luftkontaktors basierend auf der ersten Konzentration von flüssigem Trocknungsmittel in dem ersten Trocknungsmittelaustragsstrom variiert werden.

11. Entfeuchtungssystem (800), umfassend:
ein zur elektrochemischen Regeneration eines flüssigen Trocknungsmittels dienendes System (810), das einen ersten Trocknungsmittelaustragsstrom (836) umfasst,
wobei der erste Trocknungsmittelaustragsstrom (836) eine erste Konzentration von flüssigem Trocknungsmittel aufweist; und
einen ersten Luftkontaktor (820), der mit dem ersten Trocknungsmittelaustragsstrom (836) gekoppelt ist und der einen ersten Lufteintragsstrom (802), der eine erste Wasserkonzentration aufweist, in Fluidverbindung mit dem ersten Trocknungsmittelaustragsstrom (836) bringt, um einen ersten Luftaustragsstrom (804), der eine zweite Wasserkonzentration aufweist, die niedriger als die erste Wasserkonzentration ist, und einen verdünnten Trocknungsmittelaustragsstrom (838) auszubilden, wobei der verdünnte Trocknungsmittelaustragsstrom in das zur elektrochemischen Regeneration eines flüssigen Trocknungsmittels dienende System (810) zurückgeführt wird; wobei das Entfeuchtungssystem (800) **dadurch gekennzeichnet ist, dass**
das zur elektrochemischen Regeneration eines flüssigen Trocknungsmittels dienende System (810) ferner einen zweiten Trocknungsmittelaustragsstrom (834) umfasst,
wobei der zweite Trocknungsmittelaustragsstrom (834) eine zweite Konzentration von flüssigem Trocknungsmittel aufweist, die geringer als die erste Konzentration ist;
und dass es Folgendes umfasst:
einen zweiten Luftkontaktor (830), der mit dem zweiten Trocknungsmittelaustragsstrom (834) und dem ersten Luftaustragsstrom (804) gekoppelt ist und den ersten Luftaustragsstrom (804) in Fluidverbindung mit dem zweiten Trocknungsmittelaustragsstrom (834) bringt, um den ersten Luftaustragsstrom (804) durch Verdampfung zu kühlen, um einen aufbereiteten Luftstrom (806), der eine dritte Wasserkonzentration aufweist, die höher als die zweite Wasserkonzentration und niedriger als die erste Wasserkonzentration ist, und einen konzentrierten Trocknungsmittelaustragsstrom (840) auszutragen, wobei der konzentrierte Trocknungsmittelaustragsstrom (840) in das zur elektrochemischen Regeneration eines flüssigen Trocknungsmittels dienende System (810) zurückgeführt wird.

12. System nach Anspruch 11, wobei das zur elektrochemischen Regeneration eines flüssigen Trocknungsmittels dienende System einen Wassereintragsstrom umfasst, der dazu ausgestaltet ist, den zweiten Trocknungsmittelaustragsstrom zu verdünnen; oder
wobei der erste Luftkontaktor Umgebungsluft als Eintrag von außerhalb des Systems empfängt.

13. System nach Anspruch 11, ferner umfassend:
ein Wärmeübertragungssystem, das mit dem ersten Luftkontaktor gekoppelt ist und das dazu ausgestaltet ist, Wärme auf Luft außerhalb des Systems zu übertragen.

14. System nach Anspruch 11, ferner umfassend:
ein Wärmeübertragungssystem, das mit dem ersten Luftaustragsstrom gekoppelt ist und das dazu ausgestaltet ist, Wärme auf Luft außerhalb des Systems zu übertragen.

15. Verfahren zur Entfeuchtung von Luft unter Verwendung eines Entfeuchtungssystems nach einem der Ansprüche 1 bis 14, umfassend:
Führen eines ersten Trocknungsmittelaustragsstroms (312), der eine erste Konzentration aufweist, durch einen ersten Luftkontaktor (320);
Leiten von Luft über den ersten Luftkontaktor (320) hinweg, sodass der erste Trocknungsmittelaustragsstrom (312) Wasser aus der Luft absorbiert, wobei der erste Trocknungsmittelaustragsstrom (312) über die Absorption des Wassers verdünnt wird, um einen verdünnten Trocknungsmittelaustragsstrom (314), der eine zweite Konzentration aufweist, die geringer als die erste Konzentration ist, und einen entfeuchteten Luftstrom auszubilden;
Austragen des entfeuchteten Luftstroms;
Eintragen des verdünnten Trocknungsmittelaustragsstroms (314) in einen elektrodialytischen Regenerator und Ausbilden des ersten Trocknungsmittelaustragsstroms (312) und eines zweiten Trocknungsmittelaustragsstroms (316), der eine dritte Konzentration aufweist, wobei die dritte Konzentration geringer als die erste Konzentration ist;
Austragen des ersten Trocknungsmittelaustragsstroms (312) zu dem ersten Luftkontaktor (320);
Austragen des zweiten Trocknungsmittelaustragsstroms (316) zu einem zweiten Luftkontaktor (340);
Führen des zweiten Trocknungsmittelaustragsstroms (316) durch den zweiten Luftkontaktor (340);
Leiten von Luft über den zweiten Luftkontaktor (340) hinweg, sodass die Luft Wasser aus dem zweiten Trocknungsmittelaustragsstrom (316) absorbiert, wobei der zweite Trocknungsmittelaustragsstrom (316) über den Verlust des Wassers konzentriert wird, um einen konzentrierten Trocknungsmittelaustragsstrom (318), der eine vierte Konzentration aufweist, die höher als die dritte Konzentration ist, und einen befeuchteten Luftstrom auszubilden;
Eintragen des konzentrierten Trocknungsmittelaustragsstroms (318) in den elektrodialytischen Regenerator; und
Austragen des befeuchteten Luftstroms.

## Revendications

1. Système de déshumidification (300), comprenant :
un système de régénération de déshydratant liquide électrochimique (310) comprenant un premier flux de déshydratant de sortie (312), le premier flux de déshydratant de sortie (312) ayant une première concentration de déshydratant liquide ; et
un premier contacteur d'air (320) couplé au premier flux de déshydratant de sortie (312) disposant d'un premier flux d'air d'entrée (302) ayant une première concentration d'eau en communication fluidique avec le premier flux de déshydratant de sortie (312) pour former un premier flux d'air de sortie (304) ayant une deuxième concentration d'eau inférieure à la première concentration d'eau et un flux de sortie de déshydratant dilué (314), le flux de sortie de déshydratant dilué (314) étant remis en circulation dans le système de régénération de déshydratant liquide électrochimique (310) ; le système de déshumidification (300) étant **caractérisé par** :
le système de régénération de déshydratant liquide électrochimique (310) comprenant en outre un deuxième flux de déshydratant de sortie (316), le deuxième flux de déshydratant de sortie (316) ayant une deuxième concentration de déshydratant liquide inférieure à la première concentration ; et comprenant,
un deuxième contacteur d'air (340) couplé au deuxième flux de déshydratant de sortie (316) et disposant d'un deuxième flux d'air d'entrée (342) ayant une troisième concentration d'eau en communication fluidique avec le deuxième flux de déshydratant de sortie (316) pour former un deuxième flux d'air de sortie (344) ayant une quatrième concentration d'eau supérieure à la troisième concentration d'eau et un flux de sortie de déshydratant concentré (318), le flux de sortie de déshydratant concentré (318) étant remis en circulation dans le système de régénération de déshydratant liquide électrochimique (310).

2. Système selon la revendication 1, le système de régénération de déshydratant liquide électrochimique étant entraîné par un potentiel électrique qui engendre des réactions faradiques se produisant à deux électrodes différentes et le matériau subissant les réactions faradiques étant mis en circulation d'une électrode à l'autre et vice-versa.

3. Système selon la revendication 1, au moins l'un des premier et deuxième contacteurs d'air recevant de l'air ambiant comme entrée à partir de l'extérieur du système ; ou,
au moins l'un des premier et deuxième contacteurs d'air recevant de l'air de retour ou de l'air d'échappement comme entrée ; ou,
au moins l'un des premier et deuxième contacteurs d'air étant situé à distance du système de régénération de déshydratant liquide électrochimique et recevant de l'air d'échappement comme entrée à l'emplacement distant ; ou, au moins l'un des premier et deuxième contacteurs d'air exposant l'air à un flux de déshydratant liquide à travers une interface de membrane intermédiaire.

4. Système selon la revendication 1, comprenant en outre :
un système de transfert de chaleur couplé à au moins un flux d'un premier groupe de flux comprenant le premier flux d'air d'entrée, le premier flux d'air de sortie et le premier flux de déshydratant de sortie, et couplé en outre à au moins un flux d'un deuxième groupe de flux comprenant le deuxième flux d'air d'entrée, le deuxième flux d'air de sortie et le deuxième flux de déshydratant de sortie, le système de transfert de chaleur étant configuré pour transférer la chaleur d'au moins un flux du premier groupe à au moins un flux du deuxième groupe.

5. Système selon la revendication 1, comprenant en outre :
un système de transfert de chaleur couplé au premier contacteur d'air et couplé en outre au deuxième contacteur d'air pour refroidir le déshydratant liquide dans le premier contacteur d'air et transférer la chaleur au deuxième contacteur d'air.

6. Système selon la revendication 5, le système de transfert de chaleur étant configuré pour transférer la chaleur du premier contacteur d'air en utilisant un premier procédé de transfert de chaleur et pour transférer la chaleur au deuxième contacteur d'air en utilisant un deuxième procédé de transfert de chaleur, le deuxième procédé de transfert de chaleur étant différent du premier procédé de transfert de chaleur ; de préférence,
au moins l'un des procédés de transfert de chaleur étant l'évaporation.

7. Système selon la revendication 1,
le deuxième flux de déshydratant de sortie c étant un flux de sortie d'un système de traitement configuré pour traiter le deuxième flux de déshydratant de sortie.

8. Système selon la revendication 1, comprenant en outre :
un troisième contacteur d'air couplé au deuxième flux de déshydratant de sortie et couplé au premier flux d'air de sortie, disposant le premier flux d'air de sortie en communication fluidique avec un flux d'entrée comprenant le deuxième flux de déshydratant de sortie pour refroidir par évaporation le premier flux d'air de sortie afin de produire un flux d'air conditionné ayant une cinquième concentration d'eau supérieure à la deuxième concentration d'eau et inférieure à la première concentration d'eau et de produire un deuxième flux de sortie de déshydratant concentré, le deuxième flux de sortie de déshydratant concentré étant remis en circulation dans le système de régénération de déshydratant liquide électrochimique.

9. Système selon la revendication 8, comprenant en outre :
une source d'eau couplée au deuxième flux de déshydratant de sortie et à une entrée du troisième contacteur d'air, l'eau de la source d'eau étant mélangée au deuxième flux de déshydratant de sortie avant d'entrer dans le troisième contacteur d'air.

10. Système selon la revendication 8, le deuxième flux de sortie du déshydratant couplé au système de régénération de déshydratant liquide électrochimique étant un flux de sortie d'un système de traitement configuré pour traiter le deuxième flux de déshydratant de sortie ; ou,
au moins l'un des premier et deuxième contacteurs d'air recevant de l'air d'échappement comme entrée ; ou,
les paramètres de fonctionnement des premier et troisième contacteurs d'air étant modifiés en fonction de la première concentration de déshydratant liquide dans le premier flux de déshydratant de sortie.

11. Système de déshumidification (800), comprenant :
un système de régénération de déshydratant liquide électrochimique (810) comprenant un premier flux de déshydratant de sortie (836), le premier flux de déshydratant de sortie (836) ayant une première concentration de déshydratant liquide ; et
un premier contacteur d'air (820) couplé au premier flux de déshydratant de sortie (836) disposant un premier flux d'air d'entrée (802) ayant une première concentration d'eau en communication fluidique avec le premier flux de déshydratant de sortie (836) pour former un premier flux d'air de sortie (804) ayant une deuxième concentration d'eau inférieure à la première concentration d'eau et un flux de sortie de déshydratant dilué (838), le flux de sortie de déshydratant dilué étant remis en circulation dans le système de régénération de déshydratant liquide électrochimique (810) ; le système de déshumidification (800) étant **caractérisé par** :
le système de régénération de déshydratant liquide électrochimique (810) comprenant en outre un deuxième flux de déshydratant de sortie (834), le deuxième flux de déshydratant de sortie (834) ayant une deuxième concentration de déshydratant liquide inférieure à la première concentration ; et comprenant
un deuxième contacteur d'air (830) couplé au deuxième flux de déshydratant de sortie (834) et au premier flux d'air de sortie (804) et disposant le premier flux d'air de sortie (804) en communication fluidique avec le deuxième flux de déshydratant de sortie (834) pour refroidir par évaporation le premier flux d'air de sortie (804) afin de produire un flux d'air conditionné (806) ayant une troisième concentration d'eau supérieure à la deuxième concentration d'eau et inférieure à la première concentration d'eau et un flux de sortie de déshydratant concentré (840), le flux de sortie de déshydratant concentré (840) étant remis en circulation dans le système de régénération de déshydratant liquide électrochimique (810).

12. Système selon la revendication 11, le système de régénération de déshydratant liquide électrochimique comprenant un flux d'eau d'entrée configuré pour diluer le deuxième flux de déshydratant de sortie ; ou,
le premier contacteur d'air recevant l'air ambiant comme entrée à partir de l'extérieur du système.

13. Système selon la revendication 11, comprenant en outre :
un système de transfert de chaleur couplé au premier contacteur d'air configuré pour transférer la chaleur à l'air à l'extérieur du système.

14. Système selon la revendication 11, comprenant en outre :
un système de transfert de chaleur couplé au premier flux d'air de sortie configuré pour transférer la chaleur à l'air à l'extérieur du système.

15. Procédé de déshumidification de l'air à l'aide d'un système de déshumidification selon l'une quelconque des revendications 1 à 14, comprenant :
la mise en circulation d'un premier flux de déshydratant de sortie (312) ayant une première concentration à travers un premier contacteur d'air (320) ;
l'écoulement de l'air à travers le premier contacteur d'air (320) de manière à ce que le premier flux de déshydratant de sortie (312) absorbe l'eau de l'air, le premier flux de déshydratant de sortie (312) étant dilué par l'absorption de l'eau pour former un flux de sortie de déshydratant dilué (314) ayant une deuxième concentration qui est inférieure à la première concentration et un flux d'air déshumidifié ;
la sortie du flux d'air déshumidifié ;
l'entrée du flux de sortie de déshydratant dilué (314) dans un régénérateur électrodialytique et la formation du premier flux de déshydratant de sortie (312) et d'un deuxième flux de déshydratant de sortie (316) ayant une troisième concentration, la troisième concentration étant inférieure à la première concentration ;
la sortie du premier flux de déshydratant de sortie (312) vers le premier contacteur d'air (320) ;
la sortie du deuxième flux de déshydratant de sortie (316) vers un deuxième contacteur d'air (340) ;
la mise en circulation du deuxième flux de déshydratant de sortie (316) à travers le deuxième contacteur d'air (340) ;
l'écoulement de l'air à travers le deuxième contacteur d'air (340) de sorte que l'air absorbe l'eau du deuxième flux de déshydratant de sortie (316), le deuxième flux de déshydratant de sortie (316) étant concentré par la perte d'eau pour former un flux de sortie de déshydratant concentré (318) ayant une quatrième concentration qui est supérieure à la troisième concentration et un flux d'air humidifié ;
l'entrée du flux de sortie de déshydratant concentré (318) dans le régénérateur électrodialytique ; et
la sortie du flux d'air humidifié.
